(19) 

**Europäisches Patentamt**
**European Patent Office**
**Office européen des brevets**

(11) **EP 4 756 474 A1**

(12) # EUROPEAN PATENT APPLICATION

(43) Date of publication:
**10.06.2026   Bulletin 2026/24**

(21) Application number: **24383334.0**

(22) Date of filing: **05.12.2024**

(51) International Patent Classification (IPC):
***G01S 3/66*** *(2006.01)*     ***G01S 5/02*** *(2010.01)*

(52) Cooperative Patent Classification (CPC):
**G01S 3/66; G01S 5/0269;** G01S 5/04; G01S 5/12;
G01S 13/765; G01S 2205/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Keonn Technologies S.L.**
**08030 Barcelona (ES)**

(72) Inventors:
• **JUEZ DUESO, Alejandro**
**08030 Barcelona (ES)**

• **VIVES PRAT, Ausias**
**08030 Barcelona (ES)**
• **POUS ANDRÉS, Rafael**
**08030 Barcelona (ES)**
• **DE PORRATA-DORIA I YAGÜE, Ramir**
**08030 Barcelona (ES)**
• **ADROHER MORISCOT, Arnau**
**08030 Barcelona (ES)**

(74) Representative: **Elion IP, S.L.**
**Paseo Castellana, 150-4 dcha**
**28046 Madrid (ES)**

(54) **RFID TAG LOCATING WITH ROTARY ANTENNA OR ANTENNAS**

(57)    A method comprising: digitally processing a plurality of RFID data transmissions received by at least one antenna assembly, each RFID data transmission having a same identifier, and comprising estimating a location of an RFID tag corresponding to the identifier of the plurality of RFID data transmissions at least based on: a location of a first antenna assembly receiving two or more first RFID data transmissions; and an orientation of a rotary antenna of the first antenna assembly when each of the two or more first RFID data transmissions were received by said rotary antenna; and estimating of the location of the RFID tag comprises obtaining the estimated location of the RFID tag at least based on an average of a number of RFID data transmissions per orientation of the rotary antenna receiving the two or more first RFID data transmissions. Also, a system, and a computing device or system.

**FIG. 2**

EP 4 756 474 A1

## Description

## TECHNICAL FIELD

The present disclosure relates to RFID tag location estimation, for instance for inventory taking. More particularly, the present disclosure relates using at least one rotary antenna for detecting and estimating the location of at least one RFID tag at some premises.

## BACKGROUND

The use of RFID tags has increased in the last few decades owing to how affordable they have become and how effective they can be for detecting and locating them, which in turn allows detecting and locating objects associated with the RFID tags. One of the applications relying on these advantages is inventory taking, i.e., stock-taking, because RFID tags have eased keeping track of objects at premises.

Generally, the interrogation and the processing of the responses, if any, of the RFID tags may not yield accurate information. RFID tags may not receive the interrogation, or the response to the interrogation may not reach the interrogating device due to losses, destructive interference, interferences, etc. Further, even when the communication has been received at both ends, i.e., at the RFID tag and at the interrogating device, the data in the data packets and/or the properties of the electromagnetic waves may be such that it is not possible to determine the location of the RFID tag, or at least not with sufficient confidence and/or accuracy. On top of that, RFID tags usually have a limited range in terms of wireless communications, thus many antennas may have to be arranged to provide coverage in a given area.

Commonly owned European patent application no. 23382683.3, which is incorporated by reference in its entirety herein, discloses antenna assemblies with at least one rotary antenna therein that enables sweeping an area of premises while detecting responses of RFID tags to interrogations for detecting and estimating the position of RFID tags. Such antenna assemblies may reduce the number of antennas to be arranged at premises to provide coverage in part or the entirety of the area to be monitored with regards to RFID tags at premises.

It may be desirable to improve the estimation of the position, i.e., location, of RFID tags within some premises using rotary antennas, especially accuracy of the estimated location and/or speed with which the location is estimated, the latter being particularly, but not exclusively, convenient when the RFID tag may have been moved from one location to another.

## DESCRIPTION

A first aspect relates to a method for estimation of the location of one or more RFID tags. To this end, the method may comprise digitally processing a plurality of RFID data transmissions received by at least one antenna assembly, with each antenna assembly of the at least one antenna assembly having one or more rotary antennas, and each transmission of the at least one RFID data transmission having a same identifier, which in some embodiments is a unique identifier. The digital processing of the at least one RFID data transmission may comprise estimating a location of an RFID tag corresponding to the identifier of the plurality of RFID data transmissions at least based on: a location of a first antenna assembly receiving two or more first RFID data transmissions of the plurality of RFID data transmissions; and an orientation of a rotary antenna of the first antenna assembly when each of the two or more first RFID data transmissions were received by said rotary antenna.

Multiple RFID data transmissions (i.e., readings of the RFID tag that, in many cases, are responses to an active interrogation by, e.g., the at least one antenna assembly transmitting interrogations of at least one computing device) are received by one or more antennas of a same antenna assembly or of multiple antenna assemblies. The received transmissions are received with the antenna(s) at different orientations of the antenna(s). The processing of all these transmissions by, e.g., at least one computing device (which may be part of or communicatively coupled with the respective antenna assembly or be shared by multiple antenna assemblies by being communicatively coupled with them), may be indicative of the potential location of the RFID tag.

The location of the antenna receiving the RFID data transmissions and the respective orientation at the time that each RFID data transmission is received are relevant to the estimation of the location. More concretely, a greater number of RFID data transmissions received for a particular orientation increase the likelihood of the RFID tag being in or along that particular orientation or angularly close thereto (i.e., the RFID tag is contained in a plane that forms an angle with respect to the plane or axis corresponding to the particular orientation that is small, e.g., 15° or less than 15°, such as 10° or less, and/or 5° or less, etc.); and, conversely, a lower number of RFID data transmissions received for a particular orientation reduce the likelihood of the RFID tag being in or along that particular orientation or angularly close thereto.

The location may at least comprise data indicative of, e.g., a portion of a cell of the respective assembly or assemblies of the at least one antenna assembly. The cell is that covered by the respective one or more rotary antennas with the rotation thereof around at least one rotation axis. In such case, the location may include an identification of the portion of the cell where the RFID tag is. The portion of the cell is part of a surface or a volume that the cell has coverage in. The portion can be greater or smaller depending on the level of accuracy with which the location is determined. Alternatively, the location may be, for example, an angular direction or an angular range along which the tag is relative to the antenna assembly, a plane or set planes in which both the RFID tag and the respective antenna assembly is or are contained, or a set of coordinates where the RFID tag is relative to the antenna assembly, or a set of coordinates where the RFID tag is relative a common set of coordinates for all antenna assemblies, and also a distance or a distance range of the RFID tag from the antenna assembly or from a common point to all the assemblies. The antenna assembly considered is an antenna assembly (or assemblies) of the rotary antenna or antennas having captured the radio waves in respect of which the location of the RFID tag is estimated.

Each antenna assembly of the at least one antenna assembly may be according to at least one antenna assembly in the system of the fourth aspect. That is to say, each antenna assembly may comprise the respective one or more rotary antennas and a respective at least one motor for rotation of the respective one or more rotary antennas. And each antenna of the one or more rotary antennas may at least be linearly polarized, dual-linearly polarized or circularly polarized.

The antenna(s) of the antenna assembly(ies) are rotated by way of a rotating device coupled with the motor, such as, e.g., a rotatable base or support, a robot arm, or any other device known in the art for rotating an apparatus like an antenna. The commanded rotation is preferably such that all antennas of the at least one antenna of a same antenna assembly are rotated at once by way of a common rotation device, e.g., a rotatable support having the at least one antenna attached thereto, a robot arm, etc. However, each antenna could be rotated independently from one or more other antennas of the assembly by way of, e.g., a respective rotatable support having the antenna(s) attached thereto, a respective robot arm, etc.

The at least one rotation axis may have a single rotation axis, for example but without limitation, a vertical axis that results in scanning with variable azimuth or a horizontal axis that results in scanning with variable elevation.

The method may be a computer-implemented method that runs in one or more processing devices, in an independent manner and/or in a distributed manner. That is to say, one, some or all steps may be run by a same processing device, or one or some steps may be run by one processing device and some other step or steps may be run by one or more other processing devices or even be run in distributed manner, which means that several processing devices cooperate to run one or more steps. In this sense, the steps are digitally run. The processing device or devices may be included in the at least one antenna assembly itself, and/or be external to the at least one antenna assembly, for example, a processing device such as, but without limitation, a personal computer, a server, a field-programmable gate array, an application specific integrated circuit, etc., and even be remote from the at least one antenna assembly.

The RFID tag may be an active RFID tag, or a passive RFID tag, the latter being more cost-effective. Therefore, in some embodiments, the method further comprises commanding the at least one antenna of each antenna assembly of the at least one antenna assembly to radiate radio waves for interrogation of RFID tags and/or, optionally, for interrogation of the RFID tag.

In some embodiments, the estimating of the location of the RFID tag comprises obtaining the estimated location of the RFID tag at least based on an average of a number of RFID data transmissions in the two or more first RFID data transmissions per orientation of the rotary antenna receiving RFID data transmissions of the two or more first RFID data transmissions.

For determining the estimated location, each orientation for which a rotary antenna has received RFID data transmissions has a greater weight on the potential location of the RFID tag the greater the number of data transmissions have been received for it. This can be done, for example, by averaging each orientation according to the number of RFID data transmissions received for it.

In some embodiments, the estimating of the location of the RFID tag is further at least based on, when the plurality of RFID data transmissions comprises one or more second RFID data transmissions received by a second antenna assembly of the at least one antenna assembly: a location of the second antenna assembly receiving the one or more second RFID data transmissions; and an orientation of a rotary antenna of the second antenna assembly when each of the one or more second RFID data transmissions were received by said rotary antenna.

When antennas of different antenna assemblies receive RFID data transmissions, the readings of each antenna can be considered cooperatively for the estimation of the location of the RFID tag since it allows triangulation of the RFID tag. The triangulation can be partial or complete depending on the number of antenna assemblies receiving RFID data transmissions, especially within a particular time interval. Therefore, by taking into account the location of other antenna assemblies receiving the RFID transmissions and the orientations for which the respective rotary antenna(s) receive the transmissions, the distance, area or volume corresponding to the estimated location of the RFID can be made more delimited and, thus, less uncertain.

For the purposes of conducting a cooperative estimation of the location, it suffices that there is just one single reading by one or more other antenna assemblies, even though a greater number of RFID data transmissions that are received by the antenna(s) of these other antenna assembly or assemblies assists further in estimating the location of the RFID tag.

In some embodiments, the estimated location is a first estimated location of the RFID tag. The obtaining of the estimated location of the RFID tag is further based, when the plurality of RFID data transmissions comprises the one or more second RFID data transmissions received by the second antenna assembly, on an average of a number of RFID data transmissions in the one or more second RFID data transmissions per orientation of the rotary antenna receiving RFID data transmissions of the one or more second RFID data transmission.

An average for the RFID data transmission(s) received by the antenna(s) of the second antenna assembly (and/or any additional antenna assembly of the at least one antenna assembly) can be used for estimating the location of the RFID tag. In this sense, each orientation of the antennas of the second antenna assembly increases in weight as the number of readings is greater than for other orientations, and/or for orientations or total number of RFID readings of antenna of other antenna assemblies (including the first antenna assembly).

In some embodiments, the estimated location is a first estimated location of the RFID tag. The obtaining of the estimated location of the RFID tag comprises:

- determining which among the two or more first RFID data transmissions and the one or more second RFID data transmissions are the most recent RFID data transmissions and which are the oldest RFID data transmissions;
- estimating a candidate location of the RFID tag based on the most recent RFID data transmissions;
- determining whether a distance between the candidate location and the antenna assembly corresponding to the oldest RFID data transmissions is greater than a predetermined distance; and
- obtaining the estimated location of the RFID tag based on the candidate location when the determined distance is greater than the predetermined distance.

In some embodiments, especially when the determined distance is not greater than the predetermined distance, obtaining the estimated location of the RFID tag is based on the first estimated location and the candidate location.

Readings from different antenna assemblies exist, in some occasions, when the RFID tag (and, thus, any object having it arranged thereon) has been moved in the premises from one place to another. As aforesaid, the range of RFID communications is short, therefore RFID readings by antenna assemblies that are too spaced apart are generally indicative of the transportation of the RFID tag. In some cases, two antenna assemblies are considered to be too spaced apart when the distance between them is equal to or greater than three times a radius of coverage of one or both antenna assemblies.

When the location of the tag is estimated based on, for example, averages of readings per orientations of antennas, it may take a while to have a greater average for the antenna assembly whose coverage includes the RFID tag. Without such greater average, the estimated location may be at a location closer to the older antenna assembly than to the newer antenna assembly, the terms older and newer referring to how much time has elapsed since their last readings of the same RFID tag. Accordingly, the estimated location would not change significantly until this occurs.

By assessing the distance between the candidate location, which is estimated based on the fresher RFID readings, and the location of the older antenna assembly, it can be determined whether the RFID tag has indeed changed locations considerably. And based on such assessment, the updating of the estimated location can be sped up.

The predetermined distance is, in some embodiments, equal to or greater than two times a radius of coverage of the antenna assembly.

In some embodiments, the RFID data transmissions in the number of RFID data transmissions of each average (e.g., the average corresponding to the two or more first RFID data transmissions, and the average corresponding to the one or more second RFID data transmissions, in those embodiments in which there is, and other possible averages corresponding to one or more further RFID data transmissions received by antennas of third, fourth or further antenna assemblies) is weighted according to a time having elapsed since the respective RFID data transmission.

In addition to the location and orientations of the antenna/s receiving the RFID data transmissions, it is also taken into account, for the purposes of obtaining the estimated location, how old or fresh the RFID data transmissions are. Transmissions received before other transmissions may be associated with older, less probable locations for the RFID tag. Hence, by reducing the weight that such older transmissions have and/or by increasing the weight that such fresher transmissions have in the respective averages, the estimated location can be made more accurate.

In some embodiments, the obtaining of the estimated location of the RFID tag is further based on a received signal strength indicator (i.e., RSSI) and/or a received signal phase and/or a read count of the respective RFID data transmission received by the rotary antenna of the at least one antenna assembly.

The RSSI, the phase and/or the read count also influence the location estimation since each of these magnitudes or parameters is representative of the distance or the more likely presence of the RFID tag along one direction (that is to say, orientation of the respective antenna) than along other.

The aforesaid magnitudes or parameters can be, for example, weight factors in the potential orientation of the antennas that have more influence on the respective average.

In some embodiments, the plurality of RFID data transmissions in the estimating of the location of the RFID tag only comprises RFID data transmissions received by the at least one antenna assembly at a time instant posterior to a predetermined time threshold.

RFID data transmissions that are considered to be too old for them to be relevant to the estimation of the location are discarded, thereby not influencing the estimated location resulting from fresher RFID data transmissions. The predetermined time threshold may be a timestamp that is continuously or intermittently increasing as a clock signal. For example, the predetermined time threshold may be set relative to a current time instant, e.g., two hours before the current time.

In some embodiments, the RFID data transmissions in the number of RFID data transmissions of each average are scaled according to a variable distance factor of the antenna assembly. The variable distance factor may be dependent upon the orientation of the rotary antenna receiving the respective RFID data transmission.

The distance of the RFID tag relative to one or more antenna assemblies, which may be part of the estimated location, can be based on the orientations of the antenna receiving the RFID data transmissions, which in turn may be based on the antenna assembly that it belongs to.

The variable distance factor per orientation may be configured according to characteristics of both the premises and the location of the antenna assembly. Concerning the former, the antenna assembly may be arranged in, e.g., a room that is wider along one axis of the floor thereof than along an axis perpendicular thereto that is of the floor as well; that is to the say, the walls along one axis are less apart than the walls along the perpendicular axis. The variable distance factor can be greater for the axis having a greater separation between the delimiting walls than for the other axis since the RFID tag may be more distant from the antenna assembly along one axis than for the other. Likewise, the factor can be configured according to the expected arrangement of the RFID tags or objects associated therewith at the premises; for example, it may be foreseen that shelves where RFID tags are to be arranged are more distant from the antenna assembly in a particular subset of orientations than for other, regardless of whether the separation between the walls is variable or not.

In some embodiments, the method further comprises providing the variable distance factor by: digitally processing measurements of a distance measuring device; and/or digitally processing a blueprint of premises in which the antenna assembly is arranged.

Distance measuring devices, such as, e.g., laser rangefinders, may be used for configuring the variable distance factor, either once or intermittently, e.g., when an operator sets up the antenna arrangement and performs measurements with the distance measuring device, or dynamically as the measuring distance device measures the distance from the antenna arrangement to, e.g., walls as the rotary antenna/s rotate/s. In this regard, the distance measuring device may be arranged in the respective antenna assembly.

Additionally or alternatively, blueprints of the premises can also be used for establishing the dimensions of the, e.g., room, where a particular antenna assembly is. With automatic or manual image processing of a digital blueprint, in which the location of the antenna assembly must be specified, the relative distances of the antenna assembly to walls or furniture where the RFID tags may be located can be established and used to define the variable distance factor.

By way of example, the variable distance factor for a given antenna assembly may be D1 for, e.g., the angular ranges of 0°-60° and 180°-240°, and be D2 for, e.g., the remaining angles. The values of D1 and D2 may be absolute distances, e.g., 2 meters and 2.5 meters, or be relative distances, e.g., 1 and 1.2, depending on how the distance is defined when the estimated location includes distance information.

In some embodiments, the method further comprises providing instructions for: rotating the one or more rotary antennas of each antenna assembly of the at least one antenna assembly, and conducting interrogation by each antenna assembly of the at least one antenna assembly to trigger RFID responses from RFID tags.

The interrogation can be commanded in conjunction with the interrogation to be conducted with the antenna assembly/ies. To this end, the antenna assembly/ies are communicatively coupled with at least one computing device that acts as an interrogation device. The at least one computing device provides the RFID interrogation transmissions to the antenna/s for radiation and, thus, transmission.

The rotation of the one or more antennas may be intermittent, namely, the one or more antennas stop the rotation at times and keep a particular orientation for a period of time before rotating further; or the rotation may be continuous, namely, the one or more antennas do not stop the rotation. The interrogation can be conducted while the one or more rotary antennas are rotating or while stopped.

The rotation may be about one rotation axis or about more than one rotation axis. The rotation may be that that the respective rotary antenna is able to perform on a rotating device it uses. For example, the rotary antenna may be attached to a base that is only capable of rotating up about one axis to 90° to each side from a center or baseline point, , e.g., the angular position of 90° to the angular position of -90°, thus the rotation may not perform a full revolution. By way of another example, the antenna may be attached to a base that is capable of rotating in 360° about one axis, and the rotation may be an entire revolution or just a portion thereof. When the at least one rotation axis comprises more than one axis, the rotation of the rotary antenna may be the same or a different one for each rotation axis.

In some embodiments, the conducting of the interrogation comprises sequencing the interrogation conducted by at least neighboring antenna assemblies of the at least one antenna assembly such that interrogation by one or more first antenna assemblies is conducted while one or more second antenna assemblies are not conducting interrogation and vice versa.

Interrogation by multiple antenna assemblies may produce interference or false detections by antenna assemblies not having interrogated RFID tags. Any of these problematic behaviors results in the misdetection of RFID tags, thereby causing a less accurate estimation of the location of the RFID tags. By providing quiet times for some antenna assemblies while some other antenna assemblies conduct interrogation, and sequentially reproducing such configuration with the different antenna assemblies, all antenna assemblies are capable of interrogating with less or no interference from other antenna assemblies every now and then.

In the context of the present disclosure, neighboring antenna assemblies are to be understood as antenna assemblies that are apart by a distance that is preferably equal to or less than two times the minimum distance between the two closest antenna assemblies in a system, preferably equal to or less than 1,5 times said minimum distance.

In some embodiments, the conducting of the interrogation comprises sequencing the interrogation conducted by at least neighboring antenna assemblies of the at least one antenna assembly such that interrogation by one or more first antenna assemblies is conducted at one or more frequencies different from one or more frequencies that one or more second antenna assemblies conduct interrogation at.

The use of different frequencies by different antenna assemblies may alleviate the appearance of interferences and/or inadequate reception of RFID data transmissions by antenna assemblies not supposed to consider the transmissions because the interrogation was started by another assembly.

In some embodiments, the conducted interrogation is configured to be digitally processed by RFID tags having a predetermined identifier or a predetermined parameter, or by RFID tags not having the predetermined or the predetermined parameter.

The interrogation can filter out RFID tags that are not to process the interrogation because the location to be estimated is of particular RFID tags. The use of filters in the interrogation reduces the number of responses from RFID tags. Accordingly, data in the interrogation may include the filter/s for the RFID tag to consider whenever receiving an interrogation, e.g., whether some identifier or parameter must be present in the RFID tag for it to be respond, or the other way around, whether some identifier or parameter must not be present in the RFID tag for it to be respond.

In some embodiments, the rotating of the one or more rotary antennas comprises rotating the one or more rotary antennas at a first speed either upon receiving a request for locating one or more RFID tags or at predetermined times of a period of time (e.g., a day, an interval of hours during a day or week, particular days of a week or month, etc.) associated with an amount of changes of location of RFID tags exceeding a predetermined threshold, and rotating the one or more rotary antennas at a second speed otherwise. In these cases, the first speed is greater than the second speed.

More precise RFID tag scanning may be provided when the rotation of the one or more rotary antennas is performed at the second speed than at the first speed owing to the lower rotary velocity. Faster scanning can be configured whenever more changes in the location of the RFID tags are expected or when specific RFID tags are to be located, whereas slower scanning can be configured when full inventory is to be taken with detail, for example.

In some embodiments, the rotating of the one or more rotary antennas is about a single rotation axis.

In some embodiments, the rotating of the one or more rotary antennas is about at least two rotation axes that, for example, comprise first and second rotation axes, with the second axis not being parallel to the first rotation axis.

The rotation in several axes can be achieved by any means such as, for example, a robot arm. The first rotation axis could be, for example, a vertical axis, thereby letting the antenna assemblies scan with variable azimuth, and the second rotation axis could be, for example, a horizontal axis, thereby letting the antenna assemblies scan with variable elevation.

In some embodiments, the method further comprises digitally updating a location of the RFID tag according to the estimated location. The location of the RFID tag may be updated, for example, in a digital inventory or a digital ledger.

In some embodiments, the method further comprises receiving the plurality of RFID data transmissions by the at least one antenna assembly.

In some embodiments, the method further comprises causing to transmit or transmitting by the at least one antenna assembly signals for interrogation of the one or more RFID tags, thereby causing reception of the plurality of RFID data transmissions.

A second aspect relates to a computing device or system comprising means adapted to execute the steps of a method as described in the first aspect. For example, the computing device or system may comprise at least one processor and at least one memory, both configured to run the steps. The at least one memory includes computer program code or instructions so that the at least one processor can carry out the method. Therefore, the at least one processor at least causes the computing device or system to process a plurality of RFID data transmissions received by at least one antenna assembly, with each antenna assembly of the at least one antenna assembly having one or more rotary antennas, and each transmission of the at least one RFID data transmission having a same identifier, which in some embodiments is a unique identifier.

The processing of the at least one RFID data transmission may comprise estimating a location of an RFID tag corresponding to the identifier of the plurality of RFID data transmissions at least based on: a location of a first antenna assembly receiving two or more first RFID data transmissions of the plurality of RFID data transmissions; and an orientation of a rotary antenna of the first antenna assembly when each of the two or more first RFID data transmissions were received by said rotary antenna.

The computing device or system may estimate the location of one or more RFID tags and, in some embodiments, control the operation of the at least one antenna assembly to improve a speed and/or accuracy in the location estimation. Multiple computing devices can be arranged to run the steps of the method of the first aspect according to embodiments thereof, either in an independent manner or a distributed manner.

A third aspect relates to a computer program comprising instructions which, when the program is executed by at least one computing device, cause the at least one computing device to carry out the steps of a method as described in the first aspect.

A fourth aspect relates to a system for estimating the location of one or more RFID tags.

The system may comprise: at least one antenna assembly and at least one computing device or system as described in the second aspect. Each antenna assembly comprises one or more rotary antennas and at least one motor for rotation of the one or more rotary antennas around at least one rotation axis. Each computing device or system is communicatively coupled with one or more antenna assemblies of the at least one antenna assembly. All antenna assemblies of the at least one antenna assembly may be communicatively coupled with one or more computing devices or system.

Each antenna of the at least one antenna may at least be linearly polarized, dual-linearly polarized or circularly polarized, so that reception of RFID data transmissions and, in some cases, interrogation thereof can be ensured regardless of the condition of the RFID tag at least in what regards the polarization thereof.

The at least one motor may rotate a device that has the one or more rotary antennas attached thereto, for example, a support, a base, a robot arm, etc. The rotation may or may not be over 360° around at least one rotation axis. In this sense, the rotation of the one or more rotary antennas can go back-and-forth to cover the entire path it allows.

In some embodiments, one or more antenna assemblies of the at least one antenna assembly have at least four different linear polarizations, with first and second linear polarizations thereof being perpendicular one another, and third and fourth linear polarizations thereof being perpendicular one another.

For example, the third and fourth linear polarizations may be at, e.g., 45° with respect to the first and second linear polarizations.

In some embodiments, the at least one motor of one or more antenna assemblies of the at least one antenna assembly comprises first and second motors. The first motor is for rotation of the respective one or more rotary antennas around a first rotation axis of the at least one rotation axis, and the second motor is for rotation of the respective one or more rotary antennas around a second rotation axis of the at least one rotation axis. The first and second rotation axes may not be parallel.

In some embodiments, one or more antenna assemblies of the at least one antenna assembly and/or the one or more rotary antennas thereof are/is configured to rotate the respective one or more rotary antennas around an axis thereof.

In some embodiments, the system further comprises a building or a confined space thereof. The building or confined space comprises delimiting walls and/or a delimiting ceiling. Each assembly of the at least one antenna assembly is attached to a wall of the delimiting walls or the delimiting ceiling.

The antenna assembly(ies) is particularly convenient for attachment to walls or ceilings. While being fixedly attached thereto, the rotary antenna(s) of the respective antenna assembly may be made to rotate so as to scan the building or space.

In some embodiments, the at least one antenna assembly comprises a plurality of antenna assemblies. Each assembly of the plurality of antenna assemblies is arranged in the building or confined space such that cells of the plurality of antenna assemblies cover a majority of an area of the building or confined space.

In some embodiments, the system further includes RFID tags such as, e.g., the RFID tag described with reference to the first aspect.

A fifth aspect relates to a non-transitory computer-readable storage medium comprising instructions which, when executed by at least one computing device, cause the at least one computing device to carry out the steps of a method as described in the first aspect.

A sixth aspect relates to a data carrier signal carrying a computer program as described in the third aspect.

## BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:

Figure 1 shows a blueprint of premises with a plurality of antenna assemblies in accordance with embodiments.
Figures 2, 3 and 4 illustratively show location estimation of an RFID tag with methods in accordance with embodiments.

Figure 5 shows a system in accordance with embodiments.

## DETAILED DESCRIPTION

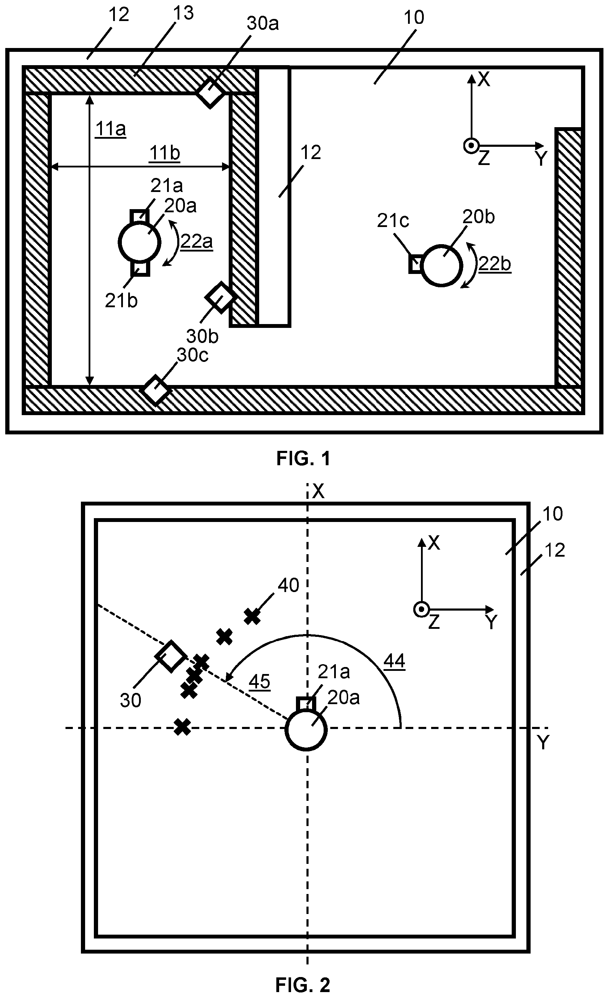

Figure 1 shows a blueprint of premises 10, e.g., a building, providing a confined space between walls 12 thereof. The premises have a plurality of antenna assemblies 20a, 20b in accordance with embodiments arranged, for example, on a ceiling of the premises 10, or in a stand. In some other embodiments, a single antenna assembly is provided, or more than two antenna assemblies are provided.

The premises 10 have a set of shelves 13 that may be used, for example, for the storage of objects. In some applications, the objects stored are subject to inventory taking. One or more objects may have at least one RFID tag 30a-30c arranged thereon.

A first antenna assembly 20a includes two rotary antennas 21a, 21b that are rotatable about, for example, a Z axis going through the center of the antenna assembly 20a. A second antenna assembly 20b includes a single rotary antenna 21c that is also rotatable about, e.g., the Z axis going through the center of the antenna assembly 20b. Double-arrowed lines, corresponding to the rotation 22a, 22b that the rotary antennas 21a-21c may perform, are represented for the sake of clarity. Although the rotations 22a, 22b illustrated is contained in an X-Y plane, it will be noted that different rotations are possible, including rotations with inclination towards, e.g., a floor of the premises 10. The rotations 22a, 22b may be configured depending on the characteristics of the premises 10, the arrangement of the antenna assemblies 20a, 20b, where the RFID tags 30a-30c are expected to be and at which height, etc. The rotation may be partial, i.e., not an entire revolution, or be complete, i.e., an entire revolution. Also, the rotation may be about two or more rotation axes.

Each of the first and second antenna assemblies 20a, 20b receive RFID data transmissions from one or more RFID data tags 30a-30c while being within the range of RFID communications, and generally during or after conducting interrogation with the respective antennas 21a-21c of the assemblies 20a, 20b. While conducting the interrogation, or between several interrogations by the antennas 21a-21c, the antennas 21a-21c may rotate so as to scan the premises 10 and, thus, cover part or the entirety of the coverage of the respective antenna assembly 20a, 20b.

As part of the location estimation of RFID tags 30a-30c, in this example, the first antenna assembly 20a is arranged such that a portion of the premises 10 to be covered by the first antenna assembly 20a has an aspect ratio 11a:11b (or vice versa). Namely, a distance 11a from one shelf 13 to the opposite shelf 13 along the X axis is longer than a distance 11b from one shelf 13 to the opposite shelf 13 along the Y axis. In other embodiments, instead of calculating the distance between shelves, it can be calculated between walls 12, or between a wall 12 and a shelf 13, or between particular positions within the premises 10 that do not need to be walls 12 or shelves 13. In cases like that of this example, a variable distance factor can be set to increase the accuracy with which the location of an RFID tag 30a-30c may be estimated. Accordingly, the variable distance factor may have a higher factor for orientations of an antenna 21a, 21b of the first antenna assembly 20a that reach the shelves 13 along the X axis, and/or have a lower factor for orientations of an antenna 21a, 21b of the first antenna assembly 20a that reach the shelves 13 along the Y axis. Such variable distance factor can be taken into account when estimating the location, especially when the distance of the RFID tag 30a-30c to the antenna assembly 20a is to be estimated.

Figure 2 illustratively shows location estimation of an RFID tag 30 with a method in accordance with embodiments.

Some premises 10 are again illustrated, in this example with a single antenna assembly 20a with a single rotary antenna 21a that may rotate about a rotation axis parallel to the Z axis.

During rotation of the rotary antenna 21a, the antenna 21a receives a multiplicity of RFID data transmissions 40 (illustrated with 'X' symbols at a distance from the antenna assembly 20a for the sake of the illustration only), namely readings, from the RFID tag 30. At certain orientations 44 that the antenna 21a has during the rotation thereof, and which may be specified in a number of ways, for example as a relative angle from a given reference such as a local axis of the antenna 21a or the antenna assembly 20a, the rotary antenna 21a receives the transmissions of the RFID tag 30. The number of readings generally increases the more oriented the antenna 21a is towards the RFID tag 30 since that increases the likelihood of eventual interrogation reaching the RFID tag 30 and an eventual response of the RFID tag 30 reach the antenna 21a; however, in some cases, even when the antenna 21a is not substantially oriented towards the RFID tag 30, there may be readings due to, for example, reflections of the transmissions, constructive interferences, etc.

A reduced number of readings, i.e., RFID data transmissions 40 received by the antenna 21a, have been illustrated in this example. Based on a distribution thereof, in terms of orientations for the antenna 30 and the number of readings per orientation 44, the average orientation of the antenna 30 yields an estimated location 45. The estimated location 45 is, in this case, a direction or a plane (extending along the Z axis), and it represents a potential direction or plane where the RFID tag 30 may be based on the readings.

By way of example, for estimating the location, the following calculations can be conducted:

$$p_i = \sum_j p_{ij}$$

$$(x_{ij}, y_{ij}) = d \cdot (cos\ \alpha_{ij}, sin\ \alpha_{ij})$$

$$(x_i, y_i) = (x_{0i}, y_{0i}) + \frac{1}{p_i} \cdot \sum_j \left( p_{ij} \cdot (x_{ij}, y_{ij}) \right)$$

Where $i$ is the index of a given antenna 21a; $j$ is the index of a given RFID data transmission 40; $p_i$ is a total weight or power at the j-th antenna 21a for the j-th received RFID data transmissions 40; x and y are Cartesian coordinates; $x_{0i}$ and $y_{0i}$ are the coordinates of the antenna assembly 20; $x_{ij}$ and $y_{ij}$ are the relative coordinates of the RFID tag 30 based on a distance $d$ (which may be a constant value, like for instance half the radius of the coverage of the antenna 30, or take a variable value depending on the available data) and an orientation $\alpha_{ij}$ of the antenna 21a; $x_i$ and $y_i$ are the coordinates of the estimated location for the RFID tag 30. It is noted that the last term of the third equation above is an average of the RFID data transmissions 40 for the orientations of the antenna 21a at which the transmissions 40 were received.

When, for example, RSSI and/or received signal phase are obtained at the antenna 21a, such magnitudes or parameters can also be taken into account in the location estimation. For example, the RSSI and the phase can be used to estimate the distance between the RFID tag 30 and the antenna 21a. In such cases, $p_{ij}$, which could be the unit otherwise, may take the following value when RSSI measurements are also considered:

$$p_{ij} = INT\left( 10^{\frac{RSSI_{ij}+100}{10}} \right).$$

When the estimated location is to be updated in, e.g., a digital inventory, a digital ledger, or the like, a timestamp may also be stored with, e.g., the last RFID data transmission 40 received.

In some embodiments, the accuracy of the location estimation is improved by sorting the RFID data transmissions 40 in descending order, i.e., the more recent transmissions 40 are the first to be considered, and conducting the following. One or more of the oldest transmissions 40 are to be ignored or discarded if the estimated location for the RFID tag 30 for those transmissions, relative to the estimated location for the RFID tag 30 according to the one or more of the most recent transmissions 40, is greater than a predetermined distance threshold, and/or a difference between the timestamp of the oldest transmissions 40 and the timestamp of the most recent transmissions is greater than a predetermined time threshold. The location of the RFID tag 30 is then to be estimated using only the filtered list of RFID data transmissions 40, i.e., without the ignored or discarded transmissions 40.

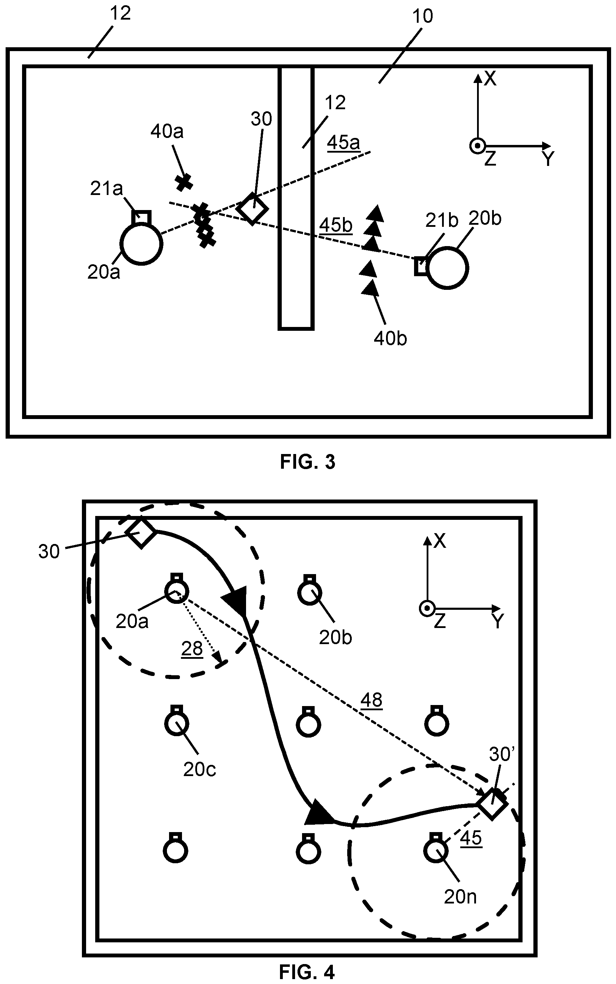

Figure 3 illustratively shows location estimation of an RFID tag 30 with a method in accordance with embodiments.

In the illustrated premises 10, which correspond to a building with a set of walls 12, there are two antenna assemblies 20a, 20b arranged in different parts thereof. A given RFID tag 30 is to have its location estimated.

In this case, a rotary antenna 21a of the first antenna assembly 20a receives a set of RFID data transmissions 40a (illustrated with 'X' symbols at a distance from the antenna assembly 20a for the sake of the illustration only), and a rotary antenna 21b of the second antenna assembly 20b receives a set of RFID data transmissions 40b (illustrated with triangle symbols at a distance from the antenna assembly 20b for the sake of the illustration only). It can be seen that despite the presence of a wall 12 interposed between the RFID tag 30 and the second antenna assembly 20b, the antenna 21b of the latter receives transmissions 40 of the RFID tag 30, which can occur depending on the particularities of the wall 12; it may also occur that, instead of relatively substantially aligned orientations of the antenna 21b towards the RFID tag 30, the transmissions 40 were received for orientations of the antenna 21b towards, e.g., an open portion (in the lower part of the illustrated premises 10, below the separation wall 12) between the two rooms, in which case the calculations performed for the second antenna assembly 20b could reduce the accuracy of the estimated location. The power with which the antenna 21a, 21b of each antenna assembly receives the RFID data transmissions 40 can be used to change a weight of the values resulting from the calculations per antenna system (e.g., lower weight for the values of the second antenna system 20b and/or greater weight for the values of the first antenna system 20a since the latter receives the transmissions 40 with greater power owing to the shorter distance between the antenna 21b and the RFID tag 30).

By way of example, for estimating the location of the RFID tag 30, the following calculations can be conducted:

$$p_i = \Sigma_j\ p_{ij}$$

$$\alpha_i = \frac{1}{p_i} \cdot \sum_j \left( p_{ij} \cdot\ \alpha_{ij} \right)$$

Where $p_{ij}$ could take, for example, the unit as value, or an expression like that above to account the RSSI; and $\alpha_i$ is an average orientation for the i-th antenna 21a based on the considered RFID data transmissions 40. Then, a system of equations is defined and calculated for the values of the two antenna assemblies 20a, 20b (of two or more antenna assemblies, if there were more antenna assemblies with readings of the RFID tag 30) having the greatest $p_i$:

$$y = y_{01} + tg(\alpha_1) \cdot (x - x_{01})$$

$$y = y_{02} + tg(\alpha_2) \cdot (x - x_{02})$$

$$x = \frac{y_{01} - y_{02} - x_{01} \cdot tg(\alpha_1) + x_{02} \cdot tg(\alpha_2)}{tg(\alpha_2) - tg(\alpha_1)}$$

$$y = y_{01} + tg(\alpha_1) \cdot (x - x_{01})$$

Where x and y are the coordinates of the estimated location for the RFID tag 30; $x_{01}$ and $y_{01}$ are the coordinates of the first 20a of the two antenna assemblies; and $x_{02}$ and $y_{02}$ are the coordinates of the second 20b of the two antenna assemblies.

By solving the system of equations, the coordinates x and y of the estimated location can be obtained.

By way of another example, the estimation of the location of the RFID tag 30 could be in a similar fashion as that described immediately above, but with up to M equations to be considered for M different orientations of antenna/s 21a, 21b receiving transmissions 40:

$$A = \begin{pmatrix} tg(\alpha_1) & -1 \\ \cdots & \cdots \\ tg(\alpha_i) & -1 \\ \cdots & \cdots \\ tg(\alpha_M) & -1 \end{pmatrix}$$

$$B = \begin{pmatrix} tg(\alpha_1) \cdot x_{01} - y_{01} \\ \cdots \\ tg(\alpha_i) \cdot x_{0i} - y_{0i} \\ \cdots \\ tg(\alpha_M) \cdot x_{0M} - y_{0M} \end{pmatrix}$$

$$P = \begin{pmatrix} p_1 & \cdots & 0 & \cdots & 0 \\ \cdots & \cdots & \cdots & \cdots & \cdots \\ 0 & \cdots & p_i & \cdots & 0 \\ \cdots & \cdots & \cdots & \cdots & \cdots \\ 0 & \cdots & 0 & \cdots & p_M \end{pmatrix} \propto C^{-1}$$

$$\begin{pmatrix} x \\ y \end{pmatrix} = (A^T \cdot P \cdot A)^{-1} \cdot A^T \cdot P \cdot B$$

Where A is an Mx2 matrix with the tangents of M different orientations; B is an Mx1 vector in which ($x_{01}$, $y_{01}$) up to ($x_{0M}, x_{0M}$) are the coordinates of the antenna system corresponding to the antenna receiving the transmission 40; P is a diagonal MxM matrix with weights based on the $p_M$ values, which can take values of $p_i$ as described, for example, with reference to Figure 2; and x and y are the coordinates of the estimated location for the RFID tag 30.

By way of another example, a direction, a plane 45a, 45b or set of coordinates per antenna assembly 20a, 20b could be calculated as potential estimated locations for the RFID tag 30, for example as described in reference to the process of Figure 2 in which the readings per orientation of the antenna 21a, 21b are averaged. Then, combine the two directions, planes 45a, 45b or coordinates of both potential estimated locations, such as with an average or some other mathematical combination, to obtain the estimated location. If more antenna assemblies had received RFID data transmissions, an analogous process could be followed for it and the estimated location consider the potential estimated location.

Figure 4 illustratively shows location estimation of an RFID tag 30, 30' with a method in accordance with embodiments.

A number of antenna assemblies 20a-20n are arranged throughout the premises 10. The arrangement and separation of the different antenna assemblies 20a-20n may preferably selected based on an average coverage of the antenna assemblies and/or based on the expected locations of RFID tags 30 within the premises 10. The coverages (shown with dashed circles for the sake of the illustration only) will depend upon the particularities of the antennas used and the rotations achievable by each antenna assembly.

In this example, an RFID tag 30 is first located within the coverage (i.e., cell) of a first antenna assembly 20a on the upper-left part of the premises 10. The location of the RFID tag 30 can be estimated according to any process previously described or according to any other variation thereof, which also fall within the scope of the present disclosure. The RFID tag 30 is then moved within the premises to a second location where the RFID tag 30' is within the coverage of a second antenna assembly 20n.

The RFID data transmissions 40 at least received by the first and second antenna assemblies 20a, 20n are processed to estimate the location of the RFID tag 30. Particularly, a first potential location is estimated from the transmissions 40 received by the first antenna assembly 20a, and a second potential location is obtained from the transmissions 40 received by the second antenna assembly 20n. Depending on when each of the transmissions 40 were received by the respective antenna assembly 20a, 20n, it can be determined which transmissions are older and which transmissions are more recent. The second potential location corresponding to the most recently received transmissions (i.e., those of the second antenna assembly 20n) is used for computing a distance 48 between it and the first antenna assembly 20a, and that distance 48 compared with a predetermined distance to establish whether the RFID tag 30 has moved significantly from the first potential location.

When the distance 48 is equal to or exceeds the predetermined distance, for example twice or thrice a radius 28 of coverage of the first antenna assembly 20a, it is considered that the RFID tag 30 has moved significantly and, thus, the second potential location is the estimated location. Alternatively, the second potential location is not directly the estimated location but the transmissions 40 corresponding to the first potential location are discarded for the estimation of the location of the RFID tag 30, which can be performed based on the transmissions received by the second antenna assembly 20n and, possibly, transmissions received by other antenna assemblies.

When the distance 48 does not exceed the predetermined distance, then the first potential location may be the estimated position, for instance when the RFID tag 30 has moved in the opposite direction, or all transmissions received by the antenna assemblies 20a-20n are considered to estimate the location of the RFID tag 30.

Depending on the speed with which the RFID tag 30, 30' is moved from the first location to the second location, one or more antenna assemblies in or next to the path followed by the RFID tag 30 may eventually detect (i.e., receive RFID data transmissions) the RFID tag 30 and estimate the location thereof as it moves within the premises 10, which in some cases may speed up the updates of the estimated location and/or such information be used to discard the estimated location in or next to the first location because it is indicative of the movement of the RFID tag 30 towards the second location.

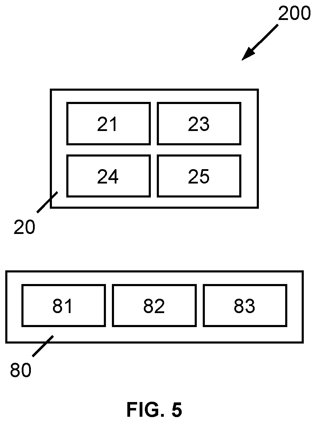

Figure 5 shows a system 100 in accordance with embodiments.

The system 100 includes one or more antenna assemblies 20, and one or more computing devices or systems 80.

The one or more computing devices or systems 80 may be part of the one or more antenna assemblies 20, or be remote from the antenna assembly(ies) 20 while being communicatively coupled therewith.

Each antenna assembly 20 includes at least one antenna 21, at least one motor 23, one or more rotating devices 24, and a means for data transmission and reception 25 like, for example, a wired or a wireless data communications module. The rotating device(s) 24, which can be any member that can be rotated owing to the at least one motor, e.g., a base, a plate, a robot arm, etc., has the at least one antenna 21 attached thereto. A same rotating device 24 can be used for rotation around one or several rotation axes, or multiple rotating devices 24 are arranged to that end. Further, each antenna 21 can be rotated independently from other antennas 21, or all antennas 21 be rotated in the same manner if they all are attached to the same rotating device 24.

Each computing device or system 80 includes at least one processor 81, at least one memory 82, and means for data transmission and reception 83 like, for example, a wired or a wireless data communications module. In some embodiments, the at least one memory 82 stores, either temporarily (e.g., upon retrieval for an external server) or permanently, computer program code configured to conduct steps of a method according to the present disclosure.

The computing devices or systems 80 exchanges data with the antenna assembly 20 by way of the respective means for data transmission and reception 24, 83.

One or more computing devices or systems 80 may be provided for keeping an inventory of RFID tags and, optionally, the objects that are associated with the RFID tags. Such computing device(s) or system(s) 80 may be included in the at least one antenna assembly 20, but is preferably external to it for enabling easier access to the inventory and easing scaling of an inventory taking system.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. A method comprising:

digitally processing a plurality of RFID data transmissions (40a-40b) received by at least one antenna assembly (20a-20n), each antenna assembly of the at least one antenna assembly having one or more rotary antennas (21a-21c), each transmission of the at least one RFID data transmission having a same identifier;
wherein the digitally processing of the at least one RFID data transmission comprises estimating a location of an RFID tag (30a-30c) corresponding to the identifier of the plurality of RFID data transmissions at least based on:

a location of a first antenna assembly receiving two or more first RFID data transmissions of the plurality of RFID data transmissions; and
an orientation (44) of a rotary antenna of the first antenna assembly when each of the two or more first RFID data transmissions were received by said rotary antenna;

wherein the estimating of the location of the RFID tag comprises obtaining the estimated location of the RFID tag at least based on an average of a number of RFID data transmissions in the two or more first RFID data transmissions per orientation of the rotary antenna receiving RFID data transmissions of the two or more first RFID data transmissions.

2. The method of claim 1, wherein the estimating of the location of the RFID tag (30a-30c) is further at least based on, when the plurality of RFID data transmissions (40a-40b) comprises one or more second RFID data transmissions received by a second antenna assembly of the at least one antenna assembly (20a-20n):

   a location of the second antenna assembly receiving the one or more second RFID data transmissions; and
   an orientation (44) of a rotary antenna (21a-21c) of the second antenna assembly when each of the one or more second RFID data transmissions were received by said rotary antenna.

3. The method of claim 2, wherein the estimated location is a first estimated location of the RFID tag (30a-30c); wherein the obtaining of the estimated location of the RFID tag is further based, when the plurality of RFID data transmissions (40a-40b) comprises the one or more second RFID data transmissions received by the second antenna assembly (20a-20n), on an average of a number of RFID data transmissions in the one or more second RFID data transmissions per orientation (44) of the rotary antenna (21a-21c) receiving RFID data transmissions of the one or more second RFID data transmissions.

4. The method of any one of claims 2-3, wherein the estimated location is a first estimated location of the RFID tag (30a-30c); wherein the obtaining of the estimated location of the RFID tag comprises;

   determining which among the two or more first RFID data transmissions (40a-40b) and the one or more second RFID data transmissions are the most recent RFID data transmissions and which are the oldest RFID data transmissions;
   estimating a candidate location of the RFID tag based on the most recent RFID data transmissions;
   determining whether a distance (48) between the candidate location and the antenna assembly (20a-20n) corresponding to the oldest RFID data transmissions is greater than a predetermined distance, the predetermined distance preferably being equal to or greater than two times a radius (28) of coverage of the antenna assembly; and
obtaining the estimated location of the RFID tag based on the candidate location when the determined distance is greater than the predetermined distance, and optionally based on the first estimated location and the candidate location otherwise.

5. The method of any one of claims 2-4, wherein the RFID data transmissions (40a-40b) in the number of RFID data transmissions of each average is weighted according to a time having elapsed since the respective RFID data transmission.

6. The method of any one of the preceding claims, wherein the obtaining of the estimated location of the RFID tag (30a-30c) is further based on a received signal strength indicator and/or a received signal phase and/or a read count of the respective RFID data transmission (40a-40b) received by the rotary antenna (21a-21c) of the at least one antenna assembly (20a-20n).

7. The method of any one of the preceding claims, wherein the plurality of RFID data transmissions (40a-40b) in the estimating of the location of the RFID tag (30a-30c) only comprises RFID data transmissions received by the at least one antenna assembly (20a-20n) at a time instant posterior to a predetermined time threshold.

8. The method of any one of the preceding claims, wherein the RFID data transmissions (40a-40b) in the number of RFID data transmissions of each average are scaled according to a variable distance factor of the antenna assembly (20a-20n), the variable distance factor being dependent upon the orientation (44) of the rotary antenna (21a-21c) receiving the respective RFID data transmission.

9. The method of claim 8, further comprising providing the variable distance factor by:

   digitally processing measurements of a distance measuring device, the distance measuring device being preferably arranged in the respective antenna assembly (20a-20n); or
   digitally processing a blueprint of premises (10) in which the antenna assembly is arranged.

10. The method of any one of the preceding claims, further comprising providing instructions for: rotating (22a-22b) the one or more rotary antennas (21a-21c) of each antenna assembly of the at least one antenna assembly (20a-20n), and conducting interrogation by each antenna assembly of the at least one antenna assembly to trigger RFID responses from RFID tags (30a-30c).

**11.** The method of claim 10, wherein the conducting of the interrogation comprises sequencing the interrogation conducted by at least neighboring antenna assemblies of the at least one antenna assembly (20a-20n) such that interrogation by one or more first antenna assemblies is conducted while one or more second antenna assemblies are not conducting interrogation and vice versa; or the interrogation of the one or more first antenna assemblies is conducted at one or more frequencies different from one or more frequencies that the one or more second antenna assemblies conduct interrogation at.

**12.** The method of any one of claims 10-11, wherein the conducted interrogation is configured to be digitally processed by RFID tags (30a-30c) having a predetermined identifier or a predetermined parameter, or by RFID tags not having the predetermined identifier or the predetermined parameter.

**13.** The method of any one of claims 10-12, wherein the rotating (22a-22b) of the one or more rotary antennas (21a-21c) comprises rotating the one or more rotary antennas at a first speed either upon receiving a request for locating one or more RFID tags (30a-30c) or at predetermined times of a period of time associated with an amount of changes of location of RFID tags exceeding a predetermined threshold, and rotating the one or more rotary antennas at a second speed otherwise; wherein the first speed is greater than the second speed.

**14.** A computing device or system (80) comprising means adapted to execute the steps of a method according to any one of the preceding claims.

**15.** A system (100) comprising:

at least one antenna assembly (20a-20n), each antenna assembly thereof comprising one or more rotary antennas (21a-21c); and
a computing device or system (80) according to claim 14.

**FIG. 1**

**FIG. 2**

FIG. 3

FIG. 4

200

21 23

24 25

20

81 82 83

80

**FIG. 5**

Europäisches
Patentamt

European
Patent Office

Office européen
des brevets

# EUROPEAN SEARCH REPORT

**Application Number**

EP 24 38 3334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CONNOLLY JAKE ET AL: "Low Cost, Wide Range Smart Cloth Tracking and Localization System", 2024 ANTENNA MEASUREMENT TECHNIQUES ASSOCIATION SYMPOSIUM (AMTA), ANTENNA MEASUREMENT TECHNIQUES ASSOCIATION (AMTA), 27 October 2024 (2024-10-27), pages 1-4, XP034780264, [retrieved on 2024-12-17] | 1-7, 10-12, 14,15 | INV. G01S3/66 G01S5/02 |
| Y | * figures 1-6 * * sections: I. Introduction; II. System Design and Principle; III. Localization Algorithm; IV. Calibration. * | 8,9,13 | |
| | ----- | | |
| X | WADA T ET AL: "A Novel Scheme for Spatial Localization of Passive RFID Tags; Communication Range Recognition (CRR) Scheme", COMMUNICATIONS, 2009. ICC '09. IEEE INTERNATIONAL CONFERENCE ON, IEEE, PISCATAWAY, NJ, USA, 14 June 2009 (2009-06-14), pages 1-6, XP031505628, ISBN: 978-1-4244-3435-0 | 1-7,10, 12,14,15 | |
| | | | **TECHNICAL FIELDS SEARCHED (IPC)** |
| | | | G01S |
| Y | * figures 6,8 * * sections: I. Introduction; II.B Proposed localization algorithm. * | 8,9,13 | |
| | ----- | | |
| A | WO 2024/196835 A1 (AUTOMATON INC [US]) 26 September 2024 (2024-09-26) * figures 3-5 * * paragraphs [0070] - [0077] * | 4,5,7 | |
| | ----- | | |
| | -/-- | | |

The present search report has been drawn up for all claims

| Place of search | Date of completion of the search | Examiner |
|---|---|---|
| Munich | 4 September 2025 | Tancredi, Urbano |

EPO FORM 1503 03.82 (P04C01)

page 1 of 2

| | Europäisches Patentamt European Patent Office Office européen des brevets | **EUROPEAN SEARCH REPORT** | **Application Number** EP 24 38 3334 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2012 090254 A (DENSO WAVE INC) 10 May 2012 (2012-05-10) * figures 9-10, 19-22 * * paragraphs [0009] - [0025], [0041] - [0046] * * paragraphs [0064] - [0072] *<br>----- | 8,9 | |
| Y | CN 203 838 711 U (SHANGHAI INST OF COMPUTING TECHNOLOGY) 17 September 2014 (2014-09-17) * figures 4-6 * * pages 3-4, 7-8 *<br>----- | 13 | |
| | | | **TECHNICAL FIELDS SEARCHED (IPC)** |

The present search report has been drawn up for all claims

| Place of search | Date of completion of the search | Examiner |
|---|---|---|
| Munich | 4 September 2025 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 38 3334

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-7, 10-12, 14, 15

   Estimating the location of a moving RFID tag based on average interrogation orientations with a first and second rotatable antenna assembly
   ---

2. claims: 8, 9

   Estimating the location of an RFID tag based on average interrogation orientations in non-isotropic radio propagation environments
   ---

3. claim: 13

   Estimating the location of an RFID tag based on average interrogation orientations with greater flexibility across various scenarios, including those involving tags moving at different speeds
   ---

## ANNEX TO THE EUROPEAN SEARCH REPORT
## ON EUROPEAN PATENT APPLICATION NO.

EP 24 38 3334

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2025

| Patent document cited in search report | Publication date | Patent family member(s) | Publication date |
|---|---|---|---|
| WO 2024196835 A1 | 26-09-2024 | NONE | |
| JP 2012090254 A | 10-05-2012 | JP 5541207 B2<br>JP 2012090254 A | 09-07-2014<br>10-05-2012 |
| CN 203838711 U | 17-09-2014 | NONE | |

EPO FORM P0459

For more details about this annex : see Official Journal of the European Patent Office, No. 12/82

**EP 4 756 474 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23382683